# EUROPEAN PATENT APPLICATION

(11) **EP 0 994 230 A2**
(43) Date of publication of application: **19.04.2000**
(21) Application number: 99119928.2
(22) Date of filing: 11.10.1999
(51) Int. Cl.: E05D 15/56, B60P 3/20

(54) **Supporting assembly for a swing-down movable partition for bodies of trucks, trailers or the like**

(30) Priority: 14.10.1998 IT BO980585
(71) Applicant: Pastore & Lombardi S.r.l., 40057 Cadriano di Granarolo Emilia (Bologna) (IT)
(72) Inventor: Hilbe, Riccardo, 40125 Bologna (IT)
(74) Representative: Modiano, Guido, Dr.-Ing.

(57) **Abstract**

A supporting assembly for a swing-down movable partition (2) for bodies of trucks, trailers or the like, which comprises at least one longitudinal guide (3) which is fixed to the ceiling of the body, an elongated carriage provided with means (4,5,6) for sliding in the guide, and a bracket (17) for supporting the partition (2) which is pivoted about an axis which lies transversely to the carriage, characterized in that it comprises at least one spring/damper unit (29) which is associated with the carriage by means of one end and is associated with the bracket (17) by means of the other end, and in that the bracket comprises means for automatically locking the sliding of the carriage in the guide during lifting and lowering of the partition and when the partition is in the vertical position.

## Description

The present invention relates to a supporting assembly for a swing-down movable partition for bodies of trucks, trailers or the like.

Conventional sliding swing-down partitions in the field of accessories for trucks, trailers or the like are mounted inside temperature-controlled bodies in order to allow to divide the internal space into a plurality of separate compartments kept at different temperatures according to the type of load that they must contain. In order to allow maximum versatility in the composition of the compartments according to the load, the partitions are mounted on one or more sliders which are slideable in adapted tracks which are fixed to the ceiling of the body of the truck, so that they can be moved to any point, and are provided with a swing-down mechanism which allows to keep them raised and parallel to the ceiling when they do not need to be used, so as to avoid unnecessary bulk.

In order to lock the partition in the chosen position and prevent it from moving along the tracks, shifting from the position in which it is meant to stay and increasing the complexity of the maneuver to be performed, it is known to use slider locking pins which must be inserted manually in the tracks when the chosen position has been reached and must be removed when it is necessary to move the partition again. Moreover in conventional mechanisms, difficulties are encountered in replacing the partition supporting springs, since they are compressed in a pushing configuration in every position.

The aim of the present invention is to obviate the above drawbacks of conventional devices, i.e., to provide a supporting assembly for a swing-down movable partition for bodies of trucks, trailers or the like which locks automatically during lifting and lowering operations and in the working position and allows easy maintenance.

Within the scope of this aim, an object of the present invention is to achieve the above aim with a structure which is simple, relatively easy to provide in practice, safe in use, effective in operation and having a relatively low cost.

This aim and this object are both achieved by the present supporting assembly for a swing-down movable partition for bodies of trucks, trailers or the like, which comprises at least one longitudinal guide which is fixed to the ceiling of the body, an elongated carriage provided with means for sliding in the guide, and a bracket for supporting the partition which is pivoted about an axis which lies transversely to the carriage, characterized in that it comprises at least one spring/damper unit which is associated with the carriage by means of one end and is associated with the bracket by means of the other end, and in that said bracket comprises means for automatically locking the sliding of the carriage in said guide during lifting and lowering of the partition and when said partition is in the vertical position.

Further characteristics of the present invention will become particularly apparent from a detailed description of a preferred but not exclusive embodiment of a supporting assembly for a swing-down movable partition for bodies of trucks, trailers or the like according to the invention, illustrated only by way of non-limitative example in the accompanying drawings, wherein:
Figure 1 is a partially sectional side view of the supporting assembly according to the invention, with the partition in the vertical position;
Figure 2 is a partially sectional front view thereof;
Figure 3 is a partially sectional side view of the assembly according to the invention, with the partition raised in the horizontal position;

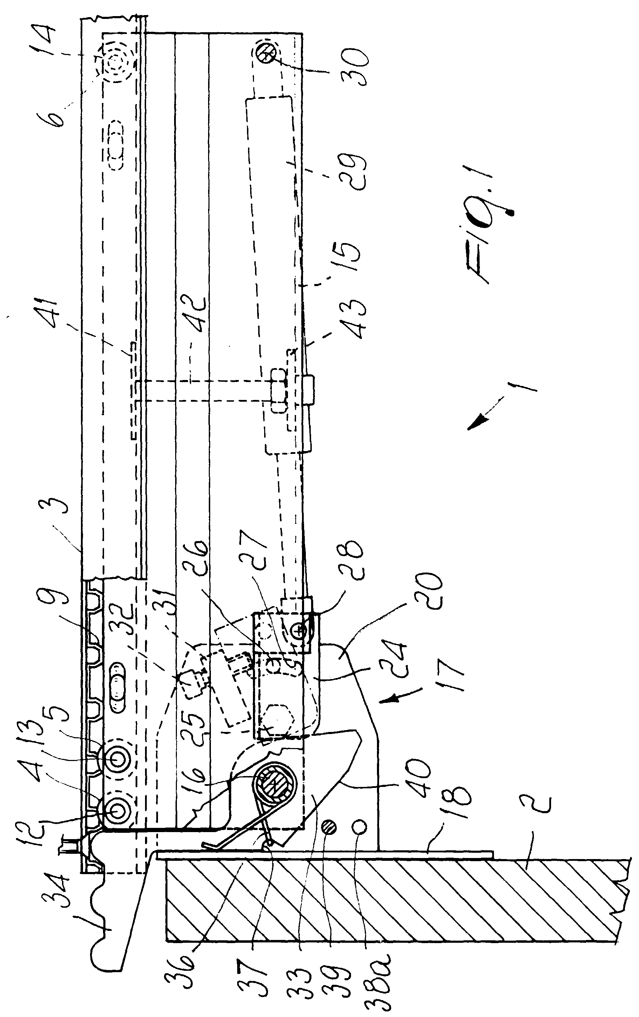

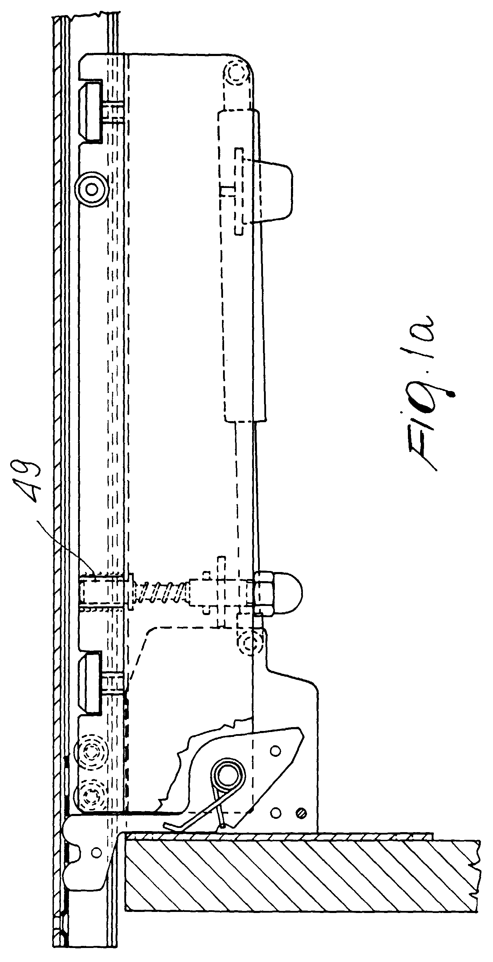

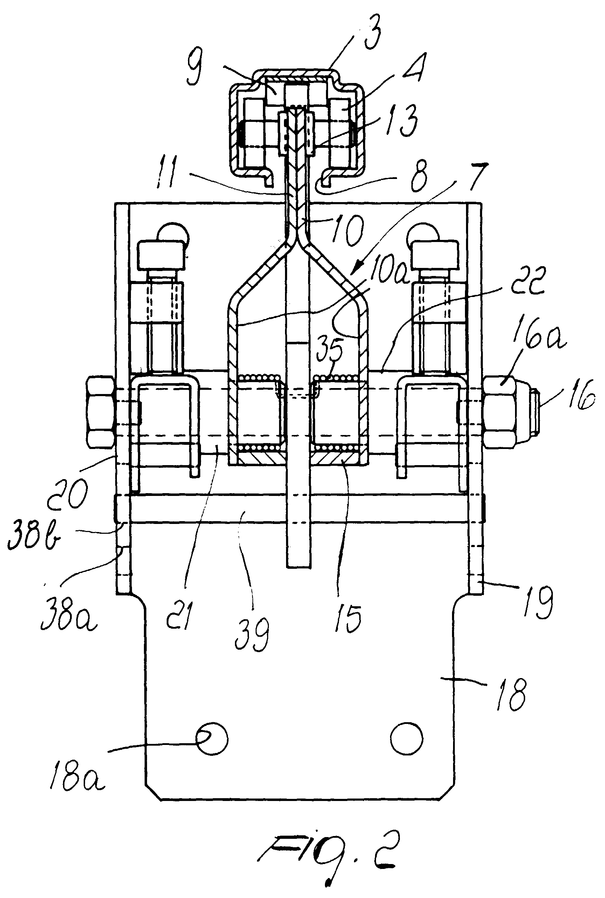

Figure 1a is a partially sectional side view of the assembly with the partition in the vertical position in another embodiment;

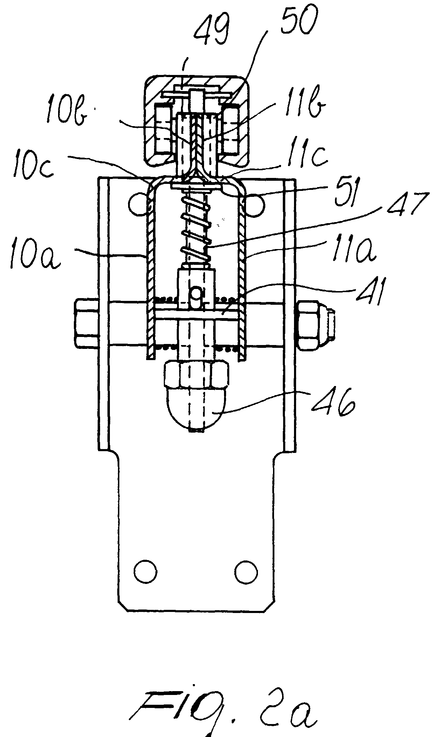

Figure 2a is a partially sectional front view of the embodiment of Figure 1a;

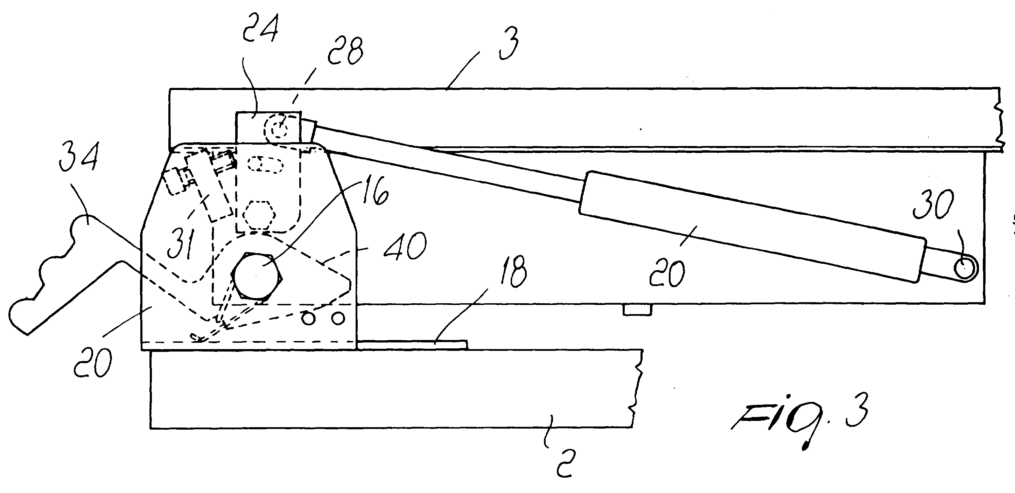

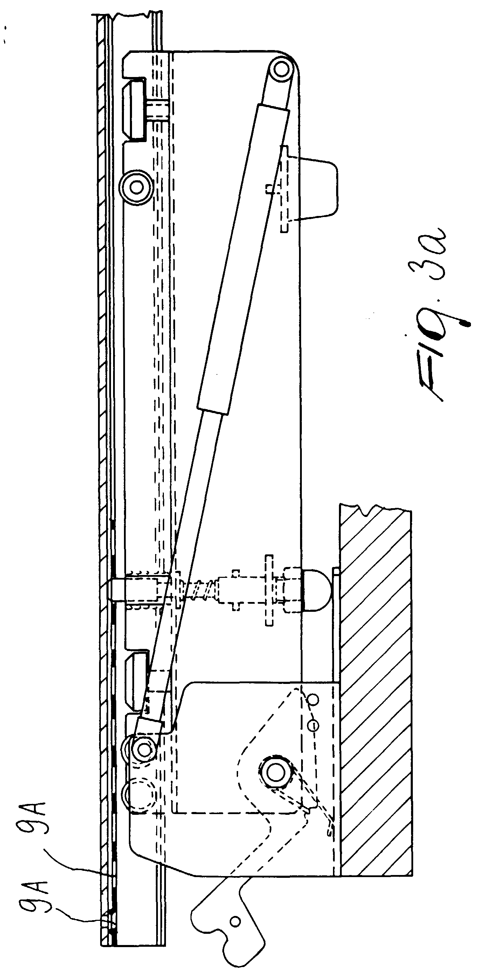

Figure 3a is a partially sectional side view of the embodiment of Figure 1a, with the partition raised in the horizontal position;

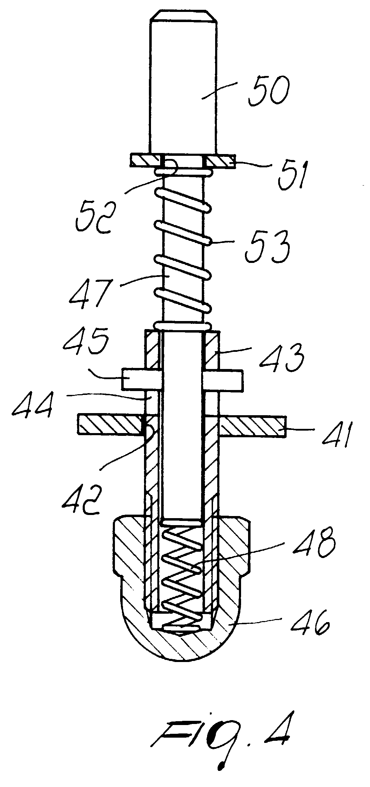

Figure 4 is a partially sectional side view, taken along a diametrical plane, of a stem for automatically locking the carriage to the guide when the partition is raised.

With reference to the above Figures, the reference numeral 1 generally designates a supporting assembly for a swing-down movable partition 2 for bodies of trucks, trailers or the like according to the invention.

The assembly 1 is composed of a guide 3 provided with a plurality of holes 3a for fixing, by means of screws, to the upper wall of the body; coplanar pairs of bearings 4, 5 and 6 of a carriage 7 that supports the partition 2, so that it can swing down, slide in said guide.

The guide 3 has a substantially rectangular cross-section and is provided, in its lower side, with a central opening 8 which is narrower than the total width of said side and through which there passes the upper part of the carriage 7; the pairs of bearings 4, 5 and 6 rest on the lateral portions of said side.

The upper part of the guide 3 is provided with a plurality of transverse raised portions 9 which are mutually equidistant and are arranged along the entire extension of the guide.

The carriage 7 is formed by two shaped laminar elements 10 and 11 which are joined in their upper part and are provided with respective through holes 12, 13 and 14 where the axes of the pairs of bearings 4, 5 and 6 are inserted; the laminar elements diverge, in their lower part, so as to end with parallel and slightly spaced portions 10a, 11a. The base of the carriage 7 is partially closed by a bottom 15. One end of the carriage 7 is crossed by a transverse pivot 16 whose end is threaded for the screw coupling of a nut 16a and acts as an articulation to a bracket 17 for supporting the partition 2.

The bracket 17 is formed by a substantially elongated rectangular surface 18 with holes 18a for coupling to the partition 2 by means of screws; two lugs 19 and 20 protrude at right angles from the sides of the bracket in a substantially central position, and two respective hollow cylinders 21, 22 are centered on the inner sides of the lugs, are crossed by the pivot 16 and end with a part which has small diameter and is inserted in two respective holes of the laminae 10 and 11. A corner of a linkage 24 is pivoted by means of a pivot 25 on each one of the inner sides of the lugs 19 and 20, and its rotation in both directions is limited by a stroke limit which comprises a pawl 26 which is rigidly coupled to the lug and slidingly guided in a curved slot 27 formed on a lateral wall of the linkage 24.

Proximate to the corner of the linkage 24 that lies opposite to the one affected by the pivot 25, a pivot 28 for the articulation of an end of a spring-damper unit 29 is provided, the other end whereof is articulated by means of a pivot 30 to one corner of the carriage 7.

An inclined block 31 is welded to the internal wall of the lugs 19 and 20, acts as upper stroke limit for the linkage 24 and is provided with a threaded through hole where a screw 32 is inserted which, by passing through the block 31 and protruding from the opposite side, presses against the linkage 24, causing it to tilt about the pivot 25.

A hammer 33 for locking the carriage is pivoted on the pivot 16 in a central position and its walls are adjacent to the end faces of the two cylinders 21 and 22.

The hammer 33 has an elongated end which ends with a tab 34 which is shaped so as to form three teeth which are substantially complementary to the raised portions 9 and are adapted to engage the raised portions 9 of the guide 3.

A spiral spring 35 is wound on the smaller-diameter portions of the cylinders 21 and 22; its ends rest against the bracket 17, and a central connecting U-shaped portion 36 is inserted in a recess 37 formed on the edge of the hammer 33.

Two pairs of aligned holes 38a and 38b are formed in the lugs 19 and 20, proximate to the surface 18 and on the side that lies furthest from the guide 3, and a bar 39 can be inserted selectively therein: said bar, during the upward motion of the partition, is adapted to rest against an inclined disengagement profile 40 which is located in the rear part of the hammer 33 and disengage it from the guide 3.

Conveniently, in order to provide a safer locking of the carriage, a first plate 41 is slideable inside the guide 3; the end of a threaded stem 42 is screwed into the plate, and the stem engages with a screw coupling the hole of a second plate 43 which is rigidly coupled to the bottom 15 of the carriage 7: the screwing and unscrewing of the stem is adapted to produce the fixing and disengagement of the carriage 7 with respect to the guide 3.

When the partition 2 is lowered into the vertical position, the spring 35 keeps the tab 34 of the hammer 33 engaged between the raised portions 9 of the guide 3, and the carriage 7 is prevented from moving. The screw 32 is screwed into the block 31 and protrudes therefrom, so as to keep the linkage 24 spaced from the block, and the spring 29 presses toward the partition, keeping it in a stable vertical configuration.

During the first step of the lifting of the partition, the hammer 33 remains pushed upwards and therefore maintains the locking of the carriage 7. As lifting continues, when the bar inserted in the pair of holes 38 (or 39) makes contact with the inclined profile 40 of the hammer 33 it causes it to descend, consequently disengaging the tab 34 and releasing the carriage 3. When the partition is lifted and horizontal, the spring 29 continues to press by expansion against the linkage 24; since at the end of this movement the pivot 28 has moved below the line that connects the pivot 30 to the pivot 16 for the rotation of the bracket 17, this raised configuration also is stable.

In order to replace the spring/damper units 29 it is sufficient, while the partition 2 is raised in the horizontal position, to unscrew the screw 32, moving the linkage 24 toward the block 31 and making the spring 29 expand; such spring accordingly reaches the end of its stroke and can thus be disassembled with ease.

In the embodiment shown in Figures 1a, 2a and 3a, like components have been designated by like numbers of the other embodiment: this embodiment defines a different manual locking stem 42 which allows to lock the carriage 7 to the guide 3 automatically when the partition is raised: also the operation for releasing the spring/damper units to allow its replacement is simplified.

In this embodiment, instead of the raised portions 9, the upper part of the guide is crossed by a plurality of mutually equidistant holes 9A: likewise, the end tab 34 of the hammer 33 is shaped so as to form, instead of the three teeth, two substantially semicircular teeth whose mutual distance is equal to the spacing of the holes 9A.

The laminae 10 and 11 are folded at right angles and a plate 41 is fixed between the parallel portions 10a, 11a of the laminae 10 and 11 and is centrally crossed by a hole 42 for the sliding passage of a tubular body 43; two diametrically opposite longitudinal slots 44 for a pin 45 are provided in the body 43, and the pin acts as a stroke limit for the sliding of the body: in a downward region, the body 43 is externally threaded for the screwing of a blind nut 46; a stem 47 is slidingly mounted in the tubular body 43 and is crossed by the stroke limiting pin 45, and its lower end is pressed upwards by a strong helical compression spring 48 which presses, in a downward region, against the bottom of the blind nut.

Between the mutually adjacent portions of the laminae 10 and 11 there are two mutually opposite drawn portions 10b and 11b which form a cylindrical slot 49 for the sliding of the upper part 50 of the stem 47 which has a larger diameter and a rounded top.

Below the portions 10c and 11c folded at right angles of the laminae 10 and 11 there rests a plate 51 which is crossed by a hole 52 whose diameter allows the sliding passage of the stem 47 but not of the upper part 50; a helical compression spring 53, weaker than the spring 48, is inserted between the plate 50 and the mouth of the body 43.

The spring 53 is meant to keep the stem 47 in a lowered configuration when the partition 2 is moved away from the horizontal condition; when instead it is proximate to the horizontal arrangement, the partition 2 presses upwards from below against the head of the blind nut and lifts the stem 47, whose top engages one of the holes 9 of the guide 3, locking the carriage 7 to the guide: if the stem 43 is not aligned with a hole 9 when it is raised, the spring 48 allows the nut to rise without breaking or deforming the stem.

In order to allow the complete release of the spring 29 during assembly, as occurs when the spring is fully elongated, it is sufficient to remove the pad 54 mounted on the carriage so as to allow the small but sufficient further final upward travel of the partition 2.

It has thus been observed that the invention achieves the intended aim and object, providing a supporting assembly for a swing-down movable partition which allows automatic locking of the supporting carriage when the partition is lowered and during the lifting and lowering operations and allows to easily replace the supporting springs and adjust the locking mechanism.

The invention thus conceived is susceptible of numerous modifications and variations, all of which are within the scope of the inventive concept.

All the details may furthermore be replaced with other technically equivalent ones.

In practice, the materials used, as well as the shapes and the dimensions, may be any according to the requirements without thereby abandoning the scope of the protection of the following claims.

The disclosures in Italian Patent Application No. BO98A00585 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A supporting assembly for a swing-down movable partition for bodies of trucks, trailers or the like, which comprises at least one longitudinal guide which is fixed to the ceiling of the body, an elongated carriage provided with means for sliding in the guide, and a bracket for supporting the partition which is pivoted about an axis which lies transversely to the carriage, characterized in that it comprises at least one spring/damper unit which is associated with the carriage by means of one end and is associated with the bracket by means of the other end, and in that said bracket comprises means for automatically locking the sliding of the carriage in said guide during lifting and lowering of the partition and when said partition is in the vertical position.

2. The assembly according to claim 1, characterized in that said locking means comprise a series of toothed raised portions arranged on the end wall of said guide and a hammer which has, at one end, a tab provided with at least one tooth which is adapted to rigidly interlock between said raised portions and is pivoted, at the other end, to said carriage about a transverse axis, said hammer being provided with means for pushing elastically toward said guide, which are adapted to keep it retained between said raised portions when the partition is in the vertical position, and with an inclined disengagement profile which is adapted to be engaged by a bar rigidly coupled to said bracket when the partition is in an almost horizontal position.

3. The assembly according to claim 1, characterized in that said spring/damper unit is associated with said bracket by articulation by means of a linkage which is pivoted on one side of said bracket.

4. The assembly according to claim 3, characterized in that a block is fixed to the internal wall of said bracket and a protruding screw is screwed therein, said screw being adapted to adjust the inclination of said linkage.

5. The movable partition according to claim 2, characterized in that said bar is adapted to be selectively inserted in at least two different pairs of holes provided in the walls of said bracket in order to vary the adjustment of the beginning of the downward movement of the hammer.

6. The assembly according to claim 1, characterized in that said locking means comprise a series of constantly spaced holes which are located on the end wall of said guide and a hammer which has, at one end, a tab which is provided with two teeth having a semicircular profile which are adapted to couple by interlocking in said holes, said hammer being pivoted, at its other end, to said carriage about a transverse axis, said hammer having elastic means for pushing toward said guide, said elastic means being adapted to keep it rigidly coupled between said raised portions when the partition is in the vertical position.

7. The assembly according to claim 6, characterized in that a carriage locking stem is mounted in the carriage so that it is slideable vertically in contrast with elastic means and is adapted to be pressed automatically by the upward-folded partition in the position for inserting the top in a hole of the guide.

8. The assembly according to claim 7, characterized in that said stem is slidingly mounted in a tubular body in contrast with elastic means which are adapted to press said stem upward and to avoid breakage in case of misalignment of the stem with respect to a hole of the guide.
